# EUROPÄISCHE PATENTANMELDUNG

(11) **EP 3 782 444 A1**
(43) Veröffentlichungstag der Anmeldung: **24.02.2021**
(21) Anmeldenummer: 20189414.4
(22) Anmeldetag: 04.08.2020
(51) Int. Cl.: A01B 79/00, A01C 17/00, A01C 21/00

(54) **VERFAHREN UND ANORDNUNG ZUM ABSPEICHERN UND ABRUFEN VON EINSTELLWERTEN EINES LANDWIRTSCHAFTLICH NUTZBAREN FAHRZEUGS UND/ODER GERÄTS**

(30) Priorität: 22.08.2019 US 201962890203 P
(71) Anmelder: Deere & Company, Moline, IL 61265 (US)
(72) Erfinder: Wagner, Stefan M., 68163 Mannheim (DE); Procuniar, Steven R., 68163 Mannheim (DE)
(74) Vertreter: Holst, Sönke

(57) **Zusammenfassung**

Ein Verfahren und eine Anordnung zum Abspeichern und Abrufen von Einstellwerten eines landwirtschaftlich nutzbaren Fahrzeugs (10) und/oder Geräts (14) umfasst folgende Schritte und Mittel zur Durchführung:
Eingabe mindestens eines Einstellwerts für einen Aktor (49) des Fahrzeugs (10) und/oder Geräts (14) mittels einer Bedienerschnittstelle,
Übersendung eines auf dem Einstellwert basierenden Kommandos an eine in Wirkverbindung mit dem Aktor (49) stehende Kontrolleinheit (32, 34, 38, 48), und
Abspeichern von auf dem Einstellwert basierenden Einstelldaten in einem Speicher (72), um den Einstellwert auf der Bedienerschnittstelle oder einer anderen Bedienerschnittstelle bei Bedarf wieder abrufen zu können,
wobei der Einstellwert unter Verwendung von Metadaten hinsichtlich technischer Eigenschaften des Fahrzeugs (10) und/oder Gerätes (14) in die gemeinsam mit den Metadaten abgespeicherten Einstelldaten umgerechnet wird, welche eine anhand des Einstellwerts und der Metadaten berechnete, physische Größe der vom Aktor (49) bewirkten, auf dem Einstellwert basierenden Einstellung des Fahrzeugs (10) und/oder Geräts (14) repräsentieren.

## Beschreibung

Die Erfindung betrifft ein Verfahren und eine Anordnung zum Abspeichern und Abrufen von Einstellwerten eines landwirtschaftlich nutzbaren Fahrzeugs und/oder Geräts, mit folgenden Schritten und Mitteln zu ihrer Durchführung:
Eingabe mindestens eines Einstellwerts für einen Aktors des Fahrzeugs und/oder Geräts mittels einer Bedienerschnittstelle,
Übersendung eines auf dem Einstellwert basierenden Kommandos an eine in Wirkverbindung mit dem Aktor stehende Kontrolleinheit, und
Abspeichern von auf dem Einstellwert basierenden Einstelldaten in einem Speicher, um den Einstellwert auf der Bedienerschnittstelle oder einer anderen Bedienerschnittstelle bei Bedarf wieder abrufen zu können.

### Stand der Technik

Eine zum Anmeldezeitpunkt des vorliegenden Schutzrechts aktuelle Norm zur Kontrolle von landwirtschaftlichen Geräten, die mit einem Fahrzeug verbunden werden können, ist die ISO 11783. Nach dieser Norm gestaltete Bussysteme umfassen elektronische Kontrolleinheiten, die Aktoren des Fahrzeugs oder des daran angebauten oder anderweitig angekoppelten Gerätes ansteuern und/oder Messwerte von Sensoren erhalten. Eine oder mehrere zusammenwirkende Kontrolleinheiten werden als Arbeitsensemble (englisch: Working Set) bezeichnet. Die Kontrolleinheiten sind untereinander und mit einem so genannten virtuellen Terminal durch einen Daten-Bus (im Folgenden auch einfach als Bus bezeichnet) verbunden. Das virtuelle Terminal erlaubt eine Anzeige von gemessenen Arbeitsparametern und/oder ihrer Sollwerte und eine Eingabe von gewünschten Sollwerten für bestimmte Parameter durch einen Bediener und dient demnach als Bedienerschnittstelle für die Kontrolleinheiten oder Arbeitsensembles.

Die ISO 11783 legt in ihrem Teil 6 fest, dass ein virtuelles Terminal eine quadratische Datenmaskenfläche bereitstellt. Außerdem sind Tasten oder berührungsempfindliche Bildschirmflächen vorgesehen, die zum Auswählen eines Eingabefelds auf dem Bildschirm, zum Editieren von Werten im Eingabefeld, zur Auswahl des jeweils zur Anzeige kommenden Arbeitsensembles und als softwaredefinierte Tasten dienen. Auf dem Bildschirm wird ferner angezeigt, welche Bedeutung den softwaredefinierten Tasten gerade zukommt.

Bei einer Initialisierung des Bussystems übersendet das virtuelle Terminal zunächst an die einzelnen Kontrolleinheiten oder Arbeitsensembles jeweils eine Konfigurationsinformation der Anzeigeeinrichtung. Die Kontrolleinheiten übersenden dann Mengen an Objekten an das virtuelle Terminal. Die Objektmengen, die auch als Objektpool bezeichnet werden, enthalten alle erforderlichen Attribute und Anweisungen für das virtuelle Terminal, um das Objekt vollständig verarbeiten und eine entsprechende Anzeigemaske aufbauen zu können. Das virtuelle Terminal speichert die Objektpools in einem veränderbaren (nicht-statischen) Speicherbereich. Für jedes Arbeitsensemble existiert ein Objektpool. Jedem Objekt im Objektpool wird eine einzigartige Adresse zugeordnet, so dass die Objekte einzeln adressierbar sind. Wenn ein Objekt auf dem Bildschirm anzuzeigen ist, wird es durch eine einzige Änderungsaktivierungsbotschaft von der Kontrolleinheit bzw. vom Arbeitsensemble aufgerufen und erfordert keinen signifikanten Verkehr im Netzwerk. Es besteht die Möglichkeit, die Objektpools in einem nicht-flüchtigen Speicherbereich des virtuellen Terminals abzuspeichern, einschließlich der aktuellen Attribute und eingegebenen Werte. Es werden demnach die jeweils aktuellen eingegebenen Werte auf dem virtuellen Terminal und in den Arbeitsensembles abgespeichert. Die Einstellwerte können somit nicht mehr benutzt werden, wenn das Gerät durch ein geringfügig anderes (oder sogar baugleiches) Gerät ausgetauscht wird, sondern müssen dann neu eingegeben werden, da die Abspeicherung der Objektpools im virtuellen Terminal auf einer Identifikation des Objektpools beruht.

Im Stand der Technik wurde auch vorgeschlagen, von einem bestimmten Bediener gewählte Einstellwerte für Fahrzeugeinrichtungen an einer zentralen Stelle abzulegen und bedienerspezifisch abzurufen (EP 0 870 654 A2), Einstellwerte für Zentrifugalstreuer oder Vorgewendesequenzen von einer zentralen Datenbank herunterzuladen (EP 2 870 849 A1, EP 2 804 139 A1), sowie Einstellwerte für Fahrzeuge und Geräte durch den Bediener oder Dienstleister einzugeben und abrufbar in einer Datenbank abzuspeichern (WO 2017/214440 A1, WO 2017/192758 A1, WO 2017/192762 A1, EP 3 301 625 A1). Auch hier ergibt sich der Nachteil, dass die Einstellwerte jeweils nur für ein einzelnes Gerät eingeben und abrufbar abgespeichert werden, was eine Neueingabe erforderlich macht, wenn das Gerät nicht zur Verfügung stehen und durch ein anderes, ggf. sogar baugleiches, Gerät ersetzt werden sollte. Zudem besteht der Nachteil, dass die Einstellwerte nur für eine Konfiguration des Geräts abgerufen werden, sodass eine neue Eingabe erforderlich wird, wenn das Gerät in einer anderen Konfiguration verwendet werden soll.

Der Teil 10 der ISO 11783 beschreibt einen so genannten Task Controller, der es ermöglicht, durchzuführende Arbeiten auf einem Farm-Management-Informationssystem vorzuplanen und entsprechende Aufträge (Tasks) an das mobile Gerätekontrollsystem zu übersenden. Daten hinsichtlich durchgeführter Aufträge werden an das Farm-Management-Informationssystem zurückgesandt. Das Farm-Management-Informationssystem erhält von einem Gerätehersteller Daten zur Beschreibung des Geräts, basierend auf denen die Arbeiten geplant werden. Die Daten zur Beschreibung des Geräts werden auch an das mobile Gerätekontrollsystem übersandt, welches sie zur Ansteuerung des Geräts benötigt. Im Falle einer Feldspritze enthält die Beschreibung die Geometrie der Teilbreiten oder Düsen, die Anzahl der Tanks und ihre Volumina und unterstützte Prozessdatenvariablen. Eine Steuereinheit (Task Controller) des mobilen Gerätekontrollsystems erhält die Aufträge und ermöglicht ihre Abarbeitung, wobei eine Bedienerschnittstelle auf dem virtuellen Terminal bereitgestellt wird, das es ermöglichen kann, einen Auftrag aus einer Liste auszuwählen, ihn zu starten, anzuhalten und wieder aufzunehmen oder zu ändern, oder einen neuen Auftrag zu erzeugen. Auf diese Weise ist es beispielsweise möglich, mit der Feldspritze teilflächenspezifische Ausbringvorgänge vorzuplanen und automatisiert durchzuführen. Wie erwähnt, benötigt man für die Erstellung und Durchführung der Aufträge genaue Daten hinsichtlich der physikalischen Eigenschaften jeweiligen Geräts, was es erforderlich macht, die gesamte Planung zu wiederholen, falls ein bestimmtes Gerät nicht zur Verfügung stehen sollte, um sie für ein anderes, unterschiedliches Gerät neu zu erstellen.

### Aufgabe

Die der Erfindung zu Grunde liegende Aufgabe wird darin gesehen, ein Verfahren und eine Anordnung zur Abspeicherung und zum Abrufen von Einstellwerten für landwirtschaftliche Fahrzeuge und Geräte bereitzustellen, bei denen die oben erwähnten Nachteile vermieden werden oder in vermindertem Maße auftreten, d.h. einmal durch einen Bediener vorgenommene Einstellwerte auch für andere und insbesondere nicht baugleiche Fahrzeuge und Geräte verwenden zu können.

### Lösung

Diese Aufgabe wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Ein Verfahren und eine Anordnung zum Abspeichern und Abrufen von Einstellwerten eines landwirtschaftlich nutzbaren Fahrzeugs und/oder Geräts umfasst folgende Schritte und Mittel zu ihrer Durchführung:
Eingabe mindestens eines Einstellwerts für einen Aktor des Fahrzeugs und/oder Geräts mittels einer Bedienerschnittstelle,
Übersendung eines auf dem Einstellwert basierenden Kommandos an eine in Wirkverbindung mit dem Aktor stehende Kontrolleinheit, und
Abspeichern von auf dem Einstellwert basierenden Einstelldaten in einem Speicher, um den Einstellwert auf der Bedienerschnittstelle oder einer anderen Bedienerschnittstelle bei Bedarf wieder abrufen zu können,
wobei der Einstellwert unter Verwendung von Metadaten hinsichtlich technischer Eigenschaften des Fahrzeugs und/oder Gerätes in die gemeinsam mit den Metadaten abgespeicherten Einstelldaten umgerechnet wird, welche eine anhand des Einstellwerts und der Metadaten berechnete, physische Größe der vom Aktor bewirkten, auf dem Einstellwert basierenden Einstellung des Fahrzeugs und/oder Geräts repräsentieren.

Mit anderen Worten werden nicht einfach irgendwelche abstrakten Einstellwerte, die nur für das jeweilige Fahrzeug und/oder Gerät brauchbar sind, für welches sie eingegeben wurden, sondern daraus abgeleitete, verallgemeinerte Einstelldaten gemeinsam mit Metadaten abgespeichert, die konkrete, technische Informationen hinsichtlich des Fahrzeugs und/oder Geräts beinhalten. Die Einstelldaten werden anhand der Metadaten berechnet und stellen eine oder mehrere physische Größen dar, die der mit dem zugehörigen Einstellwert beaufschlagte Aktor tatsächlich bewirkt. Dadurch erreicht man eine Abspeicherung von Einstelldaten, die nicht nur für das konkrete Fahrzeug und/oder Gerät, sondern auch ein anderes Fahrzeug und/oder Gerät benutzt werden können, das mit dem beim Eingeben des Einstellwerts genutzten Fahrzeug und/oder Gerät nicht baugleich sein muss, sondern beispielsweise auch von einem anderen Hersteller kommen kann. Die Einstelldaten können demnach wesentlich universeller als bisher genutzt werden, ohne sie bei Wechsel eines Fahrzeugs oder Geräts wieder neu eingeben zu müssen. Die erfindungsgemäße Vorgehensweise eignet sich für beliebige landwirtschaftliche Fahrzeuge und Geräte und auch andere Nutz- und Arbeitsfahrzeuge, insbesondere für selbstfahrende Traktoren und Erntemaschinen.

Beim Abrufen der Einstelldaten kann anhand der abgespeicherten Einstelldaten und von Metadaten hinsichtlich technischer Eigenschaften des jeweiligen (d.h. ggf. auch anderen) Fahrzeugs und/oder Geräts ein Einstellwert berechnet und von der Bedienerschnittstelle angezeigt und/oder ein auf dem berechneten Einstellwert basierendes Kommando an eine Kontrolleinheit gesandt werden.

Die Metadaten können folgendes enthalten: Informationen hinsichtlich der Art des Geräts und/oder Fahrzeugs, eine Beschreibung der vom Einstellwert beeinflussten, physischen Größe und deren Maßeinheit, während die Einstelldaten den jeweiligen Wert der physischen Größe repräsentieren.

Die Einstelldaten können durch einen Prozessor der Bedienerschnittstelle berechnet werden, auf dem eine für das jeweilige Fahrzeug und/oder Gerät spezifische Software läuft, welche den Datenverkehr in der Bedienerschnittstelle mithört und daraus die Einstellwerte ableitet und auch die Metadaten bereitstellt und gemeinsam mit den Einstelldaten abspeichert. Es wäre aber auch denkbar, zur Erstellung der Einstelldaten einen separaten Prozessor zu nutzen, der mit der Bedienerschnittstelle, der Kontrolleinheit und/oder einem Übertragungsmittel, das zur Übertragung der Einstellwerte von der Bedienerschnittstelle zur Kontrolleinheit dient, in Wirkverbindung steht und konfiguriert ist, sich die Einstellwerte von einem oder mehreren der besagten Einrichtungen durch Abfragen oder Mithören des über die Übertragungsmittel laufenden Datenverkehrs abzuholen (s. hierzu die EP 3 301 625 A1, deren Offenbarung durch Verweis mit in die vorliegenden Unterlagen aufgenommen wird). Da die Software für das jeweilige Fahrzeug und/oder Gerät spezifisch ist, kann sie auch alle Metadaten oder zumindest einen Teil davon in fest abgespeicherter Form beinhalten.

Der Prozessor kann die Metadaten und/oder Einstelldaten anhand von Einstellwerten bestimmen, die unterschiedlichen Aktoren des Fahrzeugs und/oder Geräts zugeordnet sind. Es wird demnach beispielsweise ausgenutzt, dass die Einstellung von gewissen Aktoren eines Fahrzeugs, insbesondere der Schnittstelle zur Anbringung des Geräts, davon abhängt, welche Art von Gerät mit dem Fahrzeug verbunden wird. Diese Information kann zur Erstellung der Metadaten und unter Verwendung letzterer und der Einstellwerte zur Berechnung der Einstelldaten genutzt werden.

Die Metadaten und Einstelldaten können an eine beabstandete Stelle (z.B. einen Server) übersandt werden, von der aus sie durch eine Bedienerschnittstelle eines anderen Fahrzeugs und/oder Geräts abrufbar sind.

Die Bedienerschnittstelle kann ein virtuelles Terminal sein, welches durch einen Bus mit der Kontrolleinheit verbunden ist. Hierbei kann insbesondere das Protokoll nach ISO 11783-6 verwendet werden.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Fahrzeugs mit einem angebauten Gerät, und
- Fig. 2: eine schematische Ansicht der vom Fahrzeug und Gerät verwendeten Netzwerkanordnung.

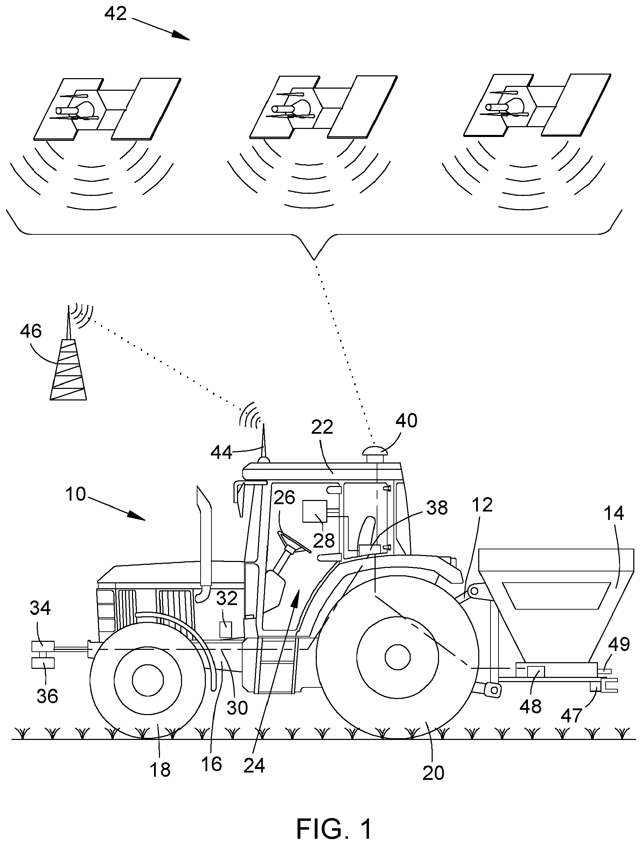

Die Figur 1 zeigt eine seitliche Ansicht einer selbstfahrenden landwirtschaftlichen Fahrzeugs 10 in Form eines Traktors und eines an einem Dreipunktgestänge 12 der Maschine 10 angebauten Geräts 14 in Form eines Schleuderdüngerstreuers. Das Fahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz, Pedale (nicht gezeigt) und ein virtuelles Terminal 28.

Das virtuelle Terminal 28 ist mit einer Datenübertragungseinrichtung 30 verbunden, die in der dargestellten Ausführungsform ein serieller Datenbus ist. Mit der Datenübertragungseinrichtung 30 ist weiterhin eine elektronische Kontrolleinheit 32 eines Verbrennungsmotors zum Antrieb der Räder 20 und weiterer angetriebener Elemente der Maschine 10 verbunden, wie eines Generators zur Versorgung des Bordnetzes mit einer Versorgungsspannung. Die Kontrolleinheit 32 ist mit Aktoren zur Steuerung der Einspritzanlage des Verbrennungsmotors und mit Sensoren zur Erfassung seines Betriebszustands verbunden. Auch ist eine Kontrolleinheit 34 eines Pflanzenzustandssensors 36 an der Vorderseite der Maschine 10, eine Kontrolleinheit 38 eines Navigationscomputers zur Positionsbestimmung und Navigation, der zur Bestimmung der aktuellen Position mit einer Antenne 40 zum Empfang von Signalen von Satelliten 42 sowie einer Radioantenne 44 zum Empfang von Signalen einer Referenzstation 46 verbunden ist und über die Datenübertragungseinrichtung 30 mit einer Kontrolleinheit (nicht gezeigt) kommuniziert, die einen Aktor für die Lenkung der Vorderräder 18 ansteuert, sowie eine Kontrolleinheit 48 zur Steuerung des Düngerstreuers 14 mit der Datenübertragungseinrichtung 30 verbunden. Die Kontrolleinheit 48 ist mit einem Aktor 49, der die Menge des vom Arbeitsgerät 14 ausgebrachten Düngematerials definiert und einem Sensor 47 verbunden, der erfasst, wie viel Material tatsächlich ausgebracht wird. Die Kontrolleinheiten 32, 34, 38 und 48 und das virtuelle Terminal 28 tauschen während des Betriebs der Maschine 10 über die Datenübertragungseinrichtung 30 Botschaften untereinander aus. Einige oder aller der Kontrolleinheiten 32, 34, 38 und 48 können zu so genannten Arbeitsensembles (englisch: Working Sets) zusammengefasst sein, die gemeinsam mit dem virtuellen Terminal 28 und ggf. anderen Kontrolleinheiten oder Arbeitsensembles kommunizieren. Das hier verwendete Protokoll entspricht vorzugsweise der Norm ISO 11783, während das virtuelle Terminal 28 insbesondere nach deren Teil 6 arbeitet.

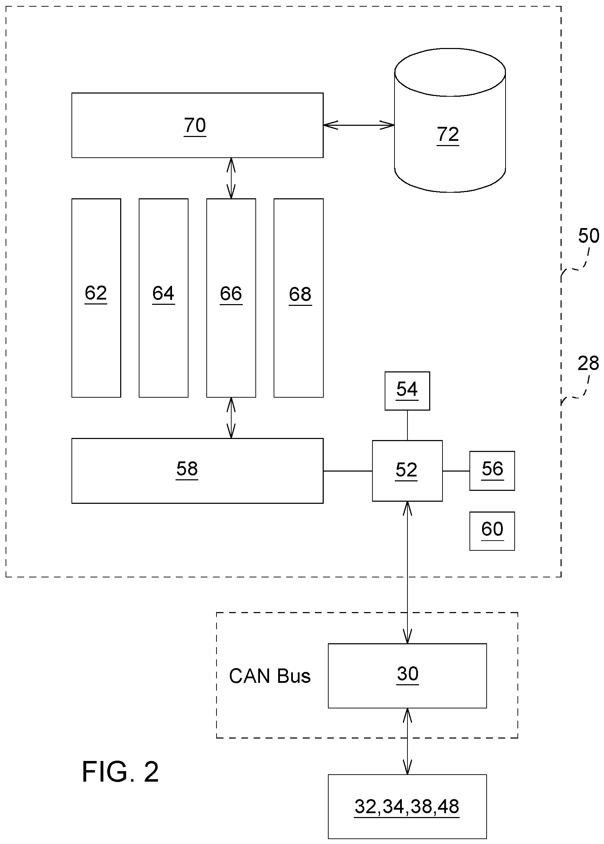

Das virtuelle Terminal 28 ist in der Figur 2 näher dargestellt. Innerhalb eines Gehäuses 50 ist eine schematisch dargestellte Terminalsteuereinheit 52 angeordnet, die als Schnittstelle für die Datenübertragungseinrichtung 30 dient, mit einem Treiber-Framework 58, einer Anzeigeeinrichtung 54 sowie mit Eingabemitteln 56 in Form von Tasten verbunden ist, die auch durch einen berührungsempfindlichen Bildschirm der Anzeigeeinrichtung 54 ergänzt oder ersetzt werden könnten. Anders als dargestellt, könnte die Terminalsteuereinheit 52 über einen separaten Kommunikationsprozessor mit der Datenübertragungseinrichtung 30 verbunden sein. Die Eingabemittel 56 können auch in einem separaten Gehäuse angebracht und auf beliebige andere Weise ausgeführt sein, z. B. als drehbares Element mit zugeordneter Kodierscheibe. Ein (oder mehrere) Prozessor(en) 60 realisiert die beschriebenen Funktionen der erwähnten Einrichtungen 52, 58, 54 und 56.

Im Betrieb dient eine Gruppe der Eingabemittel 56 zur Auswahl der Kontrolleinheit 32, 34, 38 oder 48, deren Daten zur Anzeige kommen und zur Bestätigung eines Alarms. Bei einem Fehler o. dgl. gibt die Kontrolleinheit 32, 34, 38 oder 48 einen Alarm, der ohne Bedienereingabe zur Anzeige gebracht und durch Betätigung einer Taste der Eingabemittel 56 bestätigt wird. Eine zweite Gruppe der Eingabemittel 56 dient zur Auswahl eines Eingabefelds innerhalb einer aktivierten Daten- oder Alarmmaske. Eine dritte Gruppe der Eingabemittel 56 dient zum Eingeben oder Ändern einer Information in einem Eingabefeld. Gewisse Tasten dieser Gruppe vergrößern bzw. verkleinern die jeweiligen Werte, während eine andere Taste eine Bestätigungstaste ist und die untere weitere Taste zum Verlassen des Eingabefelds ohne Änderung der Daten dient. Eine vierte Gruppe der Eingabemittel 56 umfasst eine weitere Anzahl von Tasten, deren jeweilige Bedeutung wird von der jeweils ausgewählten Kontrolleinheit 32, 34, 38 oder 48 definiert und auf der Anzeigeeinrichtung 54 angezeigt wird.

Das virtuelle Terminal 28 dient somit in an sich bekannter Weise (hierzu auch ISO 11783-6 und DE 10 2005 022 476 A1), um mit den Eingabemitteln 56 Einstellwerte einzugeben, die auf der Anzeigeeinrichtung 54 dargestellt, über die Datenübertragungseinrichtung 30 an die Kontrolleinheiten 32, 34, 38 und 48 übersandt werden und dort zur Ansteuerung von Aktoren (z.B. des Verbrennungsmotors mittels der Kontrolleinheit 32 oder des Aktors zur Lenkung der Vorderräder 18 oder des Aktors 49) dienen.

Das Treiber-Framework 58 dient dazu, den auf der Terminalsteuereinheit 52 laufenden Datenverkehr zu überwachen und die mit den Eingabemitteln 56 eingegebenen Einstellwerte daraus herauszulesen (wobei es sich um eine separate Erfindung handelt). Mit dem Treiber-Framework 58 wirken Treiberbausteine 62, 64, 66, 68 zusammen, die jeweils einer Kontrolleinheit 32, 34, 38, 48 zugeordnet und speziell für diese programmiert sind. Diese Treiberbausteine 62, 64, 66, 68 dienen dazu, einerseits die Einstellwerte der ihnen zugeordneten Kontrolleinheiten 32, 34, 38, 48 zu ermitteln und andererseits anhand in ihnen abgespeicherter Informationen hinsichtlich der ihnen zugeordneten Kontrolleinheiten 32, 34, 38, 48 bestimmte Metadaten zu erzeugen, die beispielsweise die Art und technische Eigenschaften des Fahrzeugs 10 oder Geräts 14 und die Zusammenhänge zwischen den jeweiligen Einstellwerten und von den Aktoren bei der Arbeit letztlich bewirkten physischen Größen darstellen. Beim als Düngerstreuer ausgeführten Gerät 14 ist beispielsweise in den Metadaten enthalten, dass es ein Düngerstreuer ist und der Einstellwert x einer Menge y an in der Einheit z gemessenen, ausgebrachtem Dünger je Flächeneinheit entspricht. Hierbei kann eine beliebige Datenbank verwendet werden, die als Tabelle, Formel oder dergleichen ausgeführt sein kann.

Die Treiberbausteine 62, 64, 66, 68 lassen sich relativ einfach erstellen, beispielsweise in einer einfachen Skriptsprache wie LUA, und drahtlos oder über ein Speichermedium auf das Terminal 28 übertragen.

Unter Verwendung eines verallgemeinerten Einstelldatenmodells 70 werden durch den Prozessor 60 (mittels des Treiber-Frameworks 58 und der Treiberbausteine 62, 64, 66, 68) auf Bedieneranforderung oder selbsttätig, sei es in regelmäßigen Zeitabständen oder nach zurückgelegten Strecken oder nach einer Änderung eines Einstellwerts mittels des virtuellen Terminals 28, anhand der Metadaten und der aktuellen Einstellwerte in einem Speicher 70 die Metadaten und ein Einstelldatum oder mehrere Einstelldaten abgespeichert, die auf dem jeweiligen Einstellwert beruhen. Die Einstellwerte werden unter Verwendung der Metadaten in die Einstelldaten umgerechnet, welche eine anhand des Einstellwerts und der Metadaten berechnete, physische Größe der vom Aktor bewirkten, auf dem Einstellwert basierenden Einstellung des Fahrzeugs 10 und/oder Geräts 14 repräsentieren. Im Fall des Düngerstreuers der Figur 1 wird somit abgespeichert, wieviel Dünger in kg/m² gerade ausgebracht wird.

Bei anderen Geräten 14 werden für das jeweilige Gerät spezifische Metadaten und zugehörige Einstelldaten abgespeichert, im Falle einer Feldspritze beispielsweise der Düsentyp, Rührwerkeinstellungen, Daten zu Zirkulationsleitungen und/oder der Arbeitshöhe, Flüssigkeitsdichte und/oder Randdüsen und/oder Teilbreitenschaltungen. Im Falle eines Güllefasses kann der Reifenluftdruck für Transport und Feld, die Geschwindigkeiten des Hubwerks der Ausbringorgane, die minimale und maximale Aushubhöhe der Ausbringorgane und/oder die Leerlaufdrehzahl einer Förderpumpe für die Gülle abgespeichert werden.

Die im Speicher 72 abgelegten Paare aus Metadaten und Einstelldaten können mit sie identifizierenden Kennzeichnungen (die beispielsweise die jeweilige Position, das Fahrzeug und/oder Gerät und/oder die jeweiligen Einsatzaufgabe betreffen und vom Bediener über das virtuelle Terminal 28 oder automatisch vergeben werden können) drahtlos oder über ein portables Speichermittel an eine beabstandete Stelle, z.B. einen Cloud-basierten Server oder direkt an ein anderes Fahrzeug 10 übertragen werden. Dort können die besagten Metadaten und Einstelldaten durch einen Bediener aus einer Anzahl angebotener Metadaten und Einstelldaten ausgewählt werden, z.B. anhand des Namens, oder sie werden gemeinsam mit Auftragsdaten für einen konkreten Auftrag oder anhand der jeweiligen Position, an der sich das Gerät 14 oder Fahrzeug 10 befindet, vom Server heruntergeladen, oder nach dem Ankoppeln eines Geräts 14 ans Fahrzeug 10 wird das Gerät 14 selbsttätig erkannt und die zugehörigen Metadaten und Einstelldaten werden selbsttätig vom Server heruntergeladen.

Beim Abrufen der im Speicher 72 abgelegten Paare aus Metadaten und Einstelldaten wird wieder das Einstelldatenmodell 70 verwendet, um die Einstellwerte zu rekonstruieren. Sollte hierbei das Fahrzeug 10 und/oder Gerät 14 nicht mehr jenes sein, mit dem die Metadaten und Einstelldaten erzeugt wurden, werden auch die jeweiligen Metadaten des aktuellen Fahrzeugs 10 und/oder Geräts 14 verwendet, um die Einstellwerte zu generieren. Dadurch erhält man die Möglichkeit, mit einem ersten Fahrzeug 10 und/oder Gerät 14 verwendete Einstellwerte auch auf einem zweiten Fahrzeug 10 und/oder Gerät 14 zu verwenden, das mit dem ersten Fahrzeug 10 und/oder Gerät 14 nicht baugleich sein muss, sondern aus einer anderen Baureihe, Bauart oder sogar von einem anderen Hersteller kommen kann. Dadurch erspart man sich zeitraubende Neueingaben bei einem Wechsel des Geräts 14 und/oder Fahrzeugs 10. Man beachte, dass auf dem virtuellen Terminal 28 Software zur Eingabe der Einstellwerte laufen kann mit einer Menütiefe von 2, 3 oder mehr Stufen.

Die beschriebene Vorgehensweise kann nicht nur für den Aktor 49, sondern für die Aktoren aller Kontrolleinheiten 32, 34, 38, 48 verwendet werden. Beispielsweise können vom Bediener in das virtuelle Terminal eingegebene Einstellungen der Kontrolleinheit 32 des Verbrennungsmotors (wie Drehzahl oder Leistung), einer Zapfwelle (Drehzahl), Arbeitsplatzeinstellungen (Sitzposition, Joystick- und Armlehnenbelegung etc.), einer Kontrolleinheit (nicht gezeigt) zur Kontrolle der Position einer Schnittstelle für das Gerät 14, z.B. der Dreipunktkupplung, und der Kontrolleinheit 38 des Navigationscomputers (wie eine automatische Lenkung, bei der bestimmte Abmessungen des Fahrzeugs 10 und/oder Geräts 14 einzugeben sind, Vorgewendesequenzen und/oder die Aufzeichnung von durchgeführten landwirtschaftlichen Maßnahmen zu Dokumentationszwecken und/oder ortsspezifische Ausbringmengen betreffende Daten) in der erwähnten Weise abgespeichert und wieder abgerufen werden.

Die oben beschriebenen, georeferenziert abgespeicherten Metadaten und Einstelldaten können auch zu anderen Zwecken verwendet werden, beispielsweise zur Dokumentation durchgeführter Arbeiten, zu Abrechnungszwecken und/oder als Eingangsdaten für landwirtschaftliche Modelle, mit denen weitere Arbeiten geplant werden können.

## Patentansprüche

1. Verfahren zum Abspeichern und Abrufen von Einstellwerten eines landwirtschaftlich nutzbaren Fahrzeugs (10) und/oder Geräts (14), mit folgenden Schritten:
Eingabe mindestens eines Einstellwerts für einen Aktor (49) des Fahrzeugs (10) und/oder Geräts (14) mittels einer Bedienerschnittstelle,
Übersendung eines auf dem Einstellwert basierenden Kommandos an eine in Wirkverbindung mit dem Aktor (49) stehende Kontrolleinheit (32, 34, 38, 48), und
Abspeichern von auf dem Einstellwert basierenden Einstelldaten in einem Speicher (72), um den Einstellwert auf der Bedienerschnittstelle oder einer anderen Bedienerschnittstelle bei Bedarf wieder abrufen zu können,
**dadurch gekennzeichnet, dass** der Einstellwert unter Verwendung von Metadaten hinsichtlich technischer Eigenschaften des Fahrzeugs (10) und/oder Gerätes (14) in die gemeinsam mit den Metadaten abgespeicherten Einstelldaten umgerechnet wird, welche eine anhand des Einstellwerts und der Metadaten berechnete, physische Größe der vom Aktor (49) bewirkten, auf dem Einstellwert basierenden Einstellung des Fahrzeugs (10) und/oder Geräts (14) repräsentieren.

2. Verfahren nach Anspruch 1, wobei beim Abrufen anhand der abgespeicherten Einstelldaten und von Metadaten hinsichtlich technischer Eigenschaften des jeweiligen Fahrzeugs (10) und/oder Geräts (14) ein Einstellwert berechnet und von der Bedienerschnittstelle angezeigt und/oder ein auf dem berechneten Einstellwert basierendes Kommando an eine Kontrolleinheit (32, 34, 38, 48) gesandt wird.

3. Verfahren nach Anspruch 1 oder 2, wobei die Metadaten folgendes enthalten: Informationen hinsichtlich der Art des Fahrzeugs (10) und/oder Geräts (14), eine Beschreibung der vom Einstellwert beeinflussten, physischen Größe und deren Maßeinheit, während die Einstelldaten den jeweiligen Wert der physischen Größe repräsentieren.

4. Verfahren nach einem der vorhergehenden Ansprüche, wobei die Einstelldaten durch einen Prozessor (60) der Bedienerschnittstelle berechnet werden, auf dem eine für das jeweilige Fahrzeug (10) und/oder Gerät (14) spezifische Software läuft, welche den Datenverkehr in der Bedienerschnittstelle mithört und daraus die Einstellwerte ableitet und auch die Metadaten bereitstellt und gemeinsam mit den Einstelldaten abspeichert.

5. Verfahren nach Anspruch 4, wobei der Prozessor (60) die Metadaten und/oder Einstelldaten anhand von Einstellwerten bestimmt, die unterschiedlichen Aktoren (49) des Fahrzeugs (10) und/oder Geräts (14) zugeordnet sind.

6. Verfahren nach einem der Ansprüche 1 bis 5, wobei die Metadaten und Einstelldaten an eine beabstandete Stelle übersandt werden, von der aus sie durch eine Bedienerschnittstelle eines anderen Fahrzeugs (10) und/oder Geräts (14) abrufbar sind.

7. Verfahren nach einem der vorhergehenden Ansprüche, wobei die Bedienerschnittstelle ein virtuelles Terminal (28) ist, welches durch einen Bus mit der Kontrolleinheit (32, 34, 38, 48) verbunden ist.

8. Anordnung zum Abspeichern und Abrufen von Einstellwerten eines landwirtschaftlich nutzbaren Fahrzeugs und/oder Geräts (14), umfassend:
eine Bedienerschnittstelle, die zur Eingabe mindestens eines Einstellwerts für einen Aktor (49) des Fahrzeugs (10) und/oder Geräts (14) konfiguriert ist,
eine Datenübertragungsanordnung (30), konfiguriert zur Übersendung eines auf dem Einstellwert basierenden Kommandos an eine in Wirkverbindung mit dem Aktor (49) stehende Kontrolleinheit (32, 34, 38, 48), und
einen Speicher (72) konfiguriert zum Abspeichern von auf dem Einstellwert basierenden Einstelldaten, um den Einstellwert auf der Bedienerschnittstelle oder einer anderen Bedienerschnittstelle bei Bedarf wieder abrufen zu können,
**dadurch gekennzeichnet, dass** ein Prozessor (60) vorgesehen ist, der konfiguriert ist, den Einstellwert unter Verwendung von Metadaten hinsichtlich technischer Eigenschaften des Fahrzeugs (10) und/oder Gerätes (14) in die gemeinsam mit den Metadaten abgespeicherten Einstelldaten umzurechnen, welche eine anhand des Einstellwerts und der Metadaten berechnete, physische Größe der vom Aktor (49) bewirkten, auf dem Einstellwert basierenden Einstellung des Fahrzeugs (10) und/oder Geräts (14) repräsentieren.

9. Anordnung nach Anspruch 8, wobei der Prozessor (60) konfiguriert ist, beim Abrufen anhand der abgespeicherten Einstelldaten und von Metadaten hinsichtlich technischer Eigenschaften des jeweiligen Fahrzeugs (10) und/oder Geräts (14) einen Einstellwert zu berechnen und mittels der Bedienerschnittstelle anzuzeigen und/oder ein auf dem berechneten Einstellwert basierendes Kommando an eine Kontrolleinheit (32, 34, 38, 48) zu senden.
